# EUROPÄISCHE PATENTSCHRIFT

(11) **EP 1 292 638 B1**
(45) Veröffentlichungstag und Bekanntmachung des Hinweises auf die Patenterteilung: **07.01.2004**
(21) Anmeldenummer: 01964949.0
(22) Anmeldetag: 22.05.2001
(51) Int. Cl.: C08K 5/5399, C08G 79/02

(54) **NEUE PHOSPHOR-STICKSTOFF-VERBINDUNGEN ALS FLAMMSCHUTZMITTEL IN THERMOPLASTISCHEN FORMMASSEN UND IHRE HERSTELLUNG**
NOVEL PHOSPHOROUS-NITROGEN COMPOUNDS USED AS FIREPROOFING AGENTS IN THERMOPLASTIC MOLDING MATERIALS AND THE PRODUCTION THEREOF
NOUVEAUX COMPOSES PHOSPHORE-AZOTE UTILISES COMME AGENTS IGNIFUGEANTS DANS DES MATIERES A MOULER THERMOPLASTIQUES, ET LEUR PREPARATION

(30) Priorität: 22.05.2000 DE 10025291
(43) Veröffentlichungstag der Anmeldung: 19.03.2003
(73) Patentinhaber: BASF AKTIENGESELLSCHAFT, 67056 Ludwigshafen (DE)
(72) Erfinder: FREUDENTHALER, Eva, 67063 Ludwigshafen (DE); BRAND, Alexandra, 64291 Darmstadt (DE); STERZEL, Hans-Josef, 67125 Dannstadt-Schauernheim (DE); ENGELMANN, Jochen, 67434 Neustadt (DE); KLATT, Martin, 68165 Mannheim (DE)
(74) Vertreter: Isenbruck, Günter, Dr.
(86) Internationale Anmeldenummer: PCT/EP2001/005899
(87) Internationale Veröffentlichungsnummer: WO 2001/090234

(56) Entgegenhaltungen:
- EP-A- 0 849 260
- WO-A-00/12614
- WO-A-93/22373
- DE-A- 2 417 991
- DE-A- 19 615 230
- DE-B- 1 131 892
- US-A- 4 210 451
- US-A- 4 403 075

## Beschreibung

Die Erfindung betrifft neuartige Phosphor-Stickstoff-Verbindungen, ein Verfahren zu ihrer Herstellung, ihre Verwendung als Flammschutzmittel in thermoplastischen Formmassen sowie thermoplastische Formmassen enthaltend diese neuartigen Phosphor-Stickstoff-Verbindungen.

Bei der Umsetzung von Harnstoff mit Phosphorpentasulfid haben C.v. Kutschig (Monatsh. Chem. 9 (1888) 406 bis 413) und F.v. Hemmelmayr (Monatsh. Chem. 26 (1905) 765 bis 782) die Phosphor-Stickstoff-Verbindung Ammonium-4,6-dioxo-2-thiooxo-hexahydro-1,3,5,2,λ⁵-triazaphosphorinan-2-thiolat erhalten. Die Umsetzung von Harnstoff mit Phosphorpentasulfid erfolgte dabei bei einem Molverhältnis von P₄S₁₀ zu Harnstoff von 1 : 3,7 auf dem siedenden Wasserbad, d.h., bei 80 bis 90°C. Das erhaltene Produkt war in heißem Wasser sehr leicht löslich und wies einen Zersetzungspunkt von 230°C auf

In US 4,061,589 ist der Einsatz von 1,3,5-Triazin 4,6-diketo 2-dithio ammoniumphosphamat sowie 1,3,5-Triazin 4,6-dithio 2-dithio ammoniumphosphamat als Korrosionsinhibitoren in Kühlwassersystemen offenbart. Die Herstellung dieser Phosphor-Stickstoff-Verbindungen erfolgt durch Umsetzung von Harnstoffverbindungen mit Phosphorpentasulfid bei 100°C. Das Produkt wird durch Extraktion mit kaltem Wasser gewonnen und zersetzt sich oberhalb von 260°C.

DE-A 24 17 991 betrifft die Herstellung von Thiophosphorsäureamiden, die als Alterungsschutzmittel für Polymere eingesetzt werden. Das Herstellungsverfahren erfolgt durch Umsetzung von Phosphorpentasulfid mit primären oder sekundären aromatischen Aminen bei 100 bis 150°C und der anschließenden Zugabe von aliphatischem oder aromatischem Alkohol oder Amin bei 100 bis 150°C in einem organischen Lösungsmittel. Die Thiophosphorsäureamide werden nach Abdestillation des organischen Lösungsmittels durch Kristallisation erhalten.

DD-A 203 724 betrifft die Herstellung von Ammonium-4,6-dioxo-2-thiooxo-hexahydro-1,3,5,2,λ⁵-triazaphosphorinan-2-thiolat aus Phosphorpentasulfid und Harnstoff bei Temperaturen von 90 bis 130°C. Die Ausbeute an gewünschtem Produkt ist temperaturabhängig, wobei die Ausbeute bei höheren Temperaturen erhöht ist. Ab 140°C setzt jedoch die Eigenzersetzung von Harnstoff ein, wodurch eine Ausbeuteverringerung eintritt. Die erhaltenen Produkte werden als Zwischenprodukte für die Herstellung von Bioziden und Bestandteile von Schmiermitteln sowie Korrosionsschutzmitteln eingesetzt.

Die Aufgabe der vorliegenden Erfindung ist die Herstellung neuartiger Phosphor-Stickstoff-Verbindungen, die sich gegenüber den aus dem Stand der Technik bekannten Phosphor-Stickstoff-Verbindungen insbesondere durch eine geringe Wasserlöslichkeit und eine hohe Thermostabilität auszeichnen. Die neuartigen Phosphor-Stickstoff-Verbindungen sollen als Flammschutzmittel für thermoplastische Formmassen geeignet sein.

Die Lösung der Aufgabe geht aus von einem Verfahren zur Herstellung von Phosphor-Stickstoff-Verbindungen durch Umsetzung von Phosphorsulfiden mit einer Aminokomponente, die
- mindestens ein Stickstoffatom mit zwei Wasserstoffatomen, oder
- mindestens zwei Stickstoffatome mit einem Wasserstoffatom aufweist.

Das erfindungsgemäße Verfahren ist dann dadurch gekennzeichnet, daß die Bildung der gewünschten Phosphor-Stickstoff-Verbindungen bei einer Temperatur Tₘₐₓ von ≥ 200°C erfolgt.

Die Temperatur Tₘₐₓ ist dabei die höchste in dem erfindungsgemäßen Verfahren auftretende Temperatur. Bei Durchführung des erfindungsgemäßen Verfahrens in mehreren Stufen wird dabei mindestens in einer Stufe die Temperatur Tₘₐₓ erreicht. Bevorzugt liegt die Temperatur Tₘₐₓ im Bereich von 200 bis 350°C, besonders bevorzugt im Bereich von 280 bis 320°C.

Mit Hilfe des erfindungsgemäßen Verfahrens werden Phosphor-Stickstoff-Verbindungen erhalten, die sich durch eine hohe Temperaturstabilität auszeichnen. Das bedeutet, daß bei Temperaturen im Bereich von im allgemeinen Raumtemperatur bis 300°C über einen Zeitraum von mindestens 15 min. keine Zersetzung festzustellen ist.

Gleichzeitig weisen die nach dem erfindungsgemäßen Verfahren hergestellten Phosphor-Stickstoff-Verbindungen eine sehr geringe Wasserlöslichkeit auf. Die Wasserlöslichkeit dieser Verbindungen liegt im allgemeinen bei 0 bis 5 g/l, bevorzugt bei 0 bis 0,5 g/l, besonders bevorzugt bei 0 bis 0,1 g/l. Die Phosphor-Stickstoff-Verbindungen sind somit insbesondere dort geeignet, wo die Beständigkeit gegen Feuchtigkeit eine große Rolle spielt

Die geringe Wasserlöslichkeit könnte, ohne an eine Theorie gebunden zu sein, auf der Bildung hochvemetzter polymerer Strukturen der erfindungsgemäß erhaltenen Phosphor-Stickstoff-Verbindungen beruhen. Die Bildung der hochvemetzten polymeren Strukturen erfolgt durch die in dem erfindungsgemäßen Verfahren verwendeten hohen Temperaturen Tₘₐₓ. Im Falle des Einsatzes von Aminokomponenten mit zwei oder mehr an einem Stickstoffatom gebundenen Wasserstoffatomen kann eine Vernetzung zu hochvemetzten Phosphor-Stickstoff-Verbindungen unter Ausbildung von P-N-(R)-P-Brücken erfolgen. Im Falle des Einsatzes von Aminokomponenten, die mindestens zwei Stickstoffatome mit je mindestens einem an diese gebundenen Wasserstoffatom aufweisen, erfolgt die Vernetzung auch über die Molekülkette der Aminokomponente unter Ausbildung von P-N-R-N-P-Brücken. Dabei ist unter R ein Molekülrest zu verstehen, der dem Rest der jeweils eingesetzten Aminokomponente entspricht

Die in dem erfindungsgemäßen Verfahren eingesetzte Aminokomponente ist bevorzugt ausgewählt aus primären aliphatischen oder aromatischen Aminen, primären oder sekundären Diaminen, Diiminen, primären oder sekundären Ammoniumsalzen, Amiden organischer oder anorganischer Säuren, Hydrazinen, Hydraziden, Semicarbaziden, Semicarbazonen, Harnstoff, Dicyandiamid, Melamin, Guanidin oder dessen Salz (Guanidiniumcarbonat) oder Mischungen davon.

Besonders geeignete Vertreter der entsprechenden Gruppen sind im folgenden dargestellt:
Primäre aliphatische oder aromatische Amine 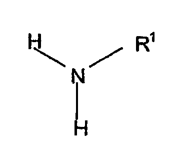
   - R¹ =: H, aliphatischer oder aromatischer organischer Rest mit bevorzugt 1 bis 12 Kohlenstoffatomen
Primäre oder sekundäre Diamine 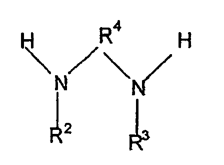
   - R², R³ =: H, aliphatischer oder aromatischer organischer Rest mit bevorzugt 1 bis 12 Kohlenstoffatomen
   - R⁴ =: Kohlenwasserstoffkette mit bevorzugt 1 bis 12 Kohlenstoffatomen
Diimine 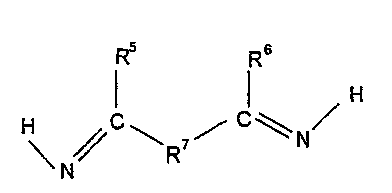
   - R⁵, R⁶ =: H, aliphatischer oder aromatischer organischer Rest mit bevorzugt 1 bis 12 Kohlenstoffatomen
   - R⁷ =: Kohlenwasserstoffkette mit bevorzugt 1 bis 12 Kohlenstoffatomen
Primäre oder sekundäre Ammoniumsalze 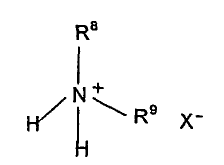
   - R⁸, R⁹ =: H, beliebiger aliphatischer oder aromatischer organischer Reste mit bevorzugt 1 bis 12 Kohlenstoffatomen
   - X =: beliebiges Anion, bevorzugt halogenfrei
Amide organischer oder anorganischer Säuren (z.B. Carbonsäure- oder Sulfonsäureamide
   - R¹⁰, R¹¹ =: H, beliebiger aliphatischer oder aromatischer organischer Rest mit bevorzugt 1 bis 12 Kohlenstoffatomen
Hydrazine 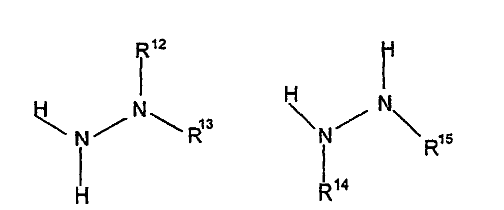
   - R¹², R¹³, R¹⁴, R¹⁵ =: H, beliebiger aliphatischer oder aromatischer organischer Rest mit bevorzugt 1 bis 12 Kohlenstoffatomen
Hydrazide 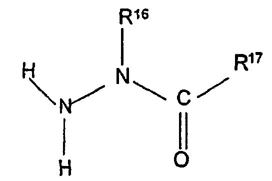
   - R¹⁶, R¹⁷ =: H, beliebiger aliphatischer oder aromatischer organischer Rest mit bevorzugt 1 bis 12 Kohlenstoffatomen
Semicarbazide 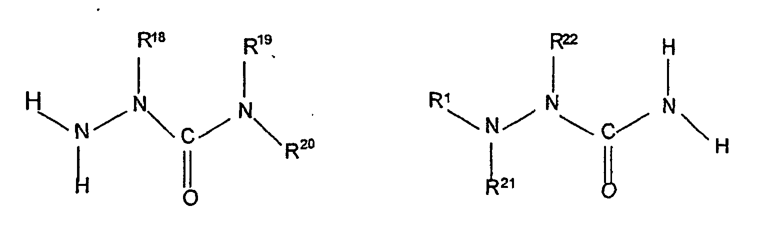
   - R¹⁸, R¹⁹, R²⁰, R²¹, R²² =: H, beliebiger aliphatischer oder aromatischer organischer Rest mit bevorzugt 1 bis 12 Kohlenstoffatomen
Semicarbazone 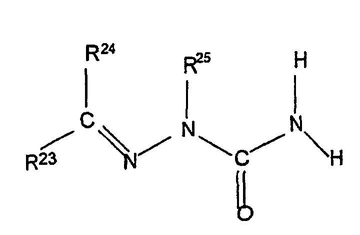
   - R²³, R24, R²⁵ =: H, beliebiger aliphatischer oder aromatischer organischer Rest mit bevorzugt 1 bis 12 Kohlenstoffatomen
Harnstoff 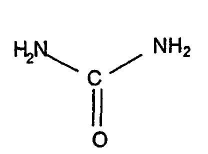
Dicyandiamid 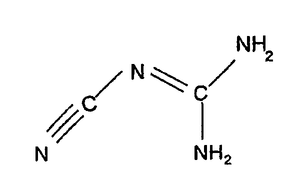
Melamin 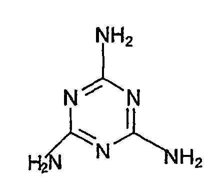
Guanidin z.B. in Form seines Salzes Guanidiniumcarbonat

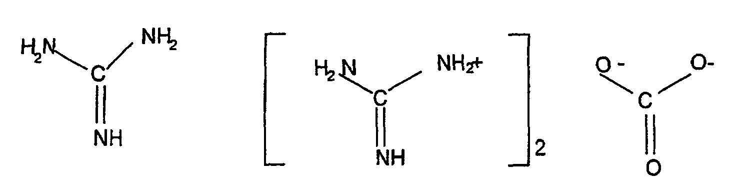

Bevorzugt werden Aminokomponenten ausgewählt aus Harnstoff, Dicyandiamid, Melamin, Guanidin oder dessen Salz, insbesondere Guanidiniumcarbonat oder Mischungen davon eingesetzt.

Als Phosphorsulfide werden bevorzugt monomolekulare Phosphorsulfide der Zusammensetzung P₄Sₙ eingesetzt, wobei n = 3 bis 10 ist oder Gemische davon. Bevorzugt werden P₄S₁₀ oder P₄S₃ eingesetzt, besonders bevorzugt ist P₄S₁₀. Unter P₄S₁₀ (Tetraphosphordecasulfid) ist dieselbe Verbindung zu verstehen wie unter Phosphorpentasulfid (P₂S₅). Diese Substanz liegt in fester Form als P₄S₁₀ vor, schmilzt bei 288°C und siedet bei 514°C unter Bildung eines gelben, aus Molekülen der Masse P₂S₅ bestehenden Dampfes.

Die in dem erfindungsgemäßen Verfahren eingesetzten Phosphorsulfide können in einer vorgeschalteten Reaktion durch Zusammenschmelzen von rotem Phosphor und Schwefel in einer Kohlendioxidatmosphäre hergestellt werden. Dabei entstehen üblicherweise Gemische verschiedener Phosphorsulfide, die ohne weitere Reinigung oder Auftrennung mit der Aminokomponente umgesetzt werden können. Es ist auch möglich, das entsprechende Phosphorsulfid bzw. die Phosphorsulfidgemische in situ, während der Umsetzung mit der Aminokomponente, zu bilden.

Das Verhältnis der in den Phosphorsulfiden enthaltenen Schwefelatome zu den in den Aminokomponenten enthaltenen kondensierbaren Stickstoffgruppen beträgt im allgemeinen 1 : 0,5 bis 1 : 10, bevorzugt 1 : 1 bis 1 : 5, besonders bevorzugt 1 : 2 bis 1 : 3.

Durch dieses Verhältnis von Schwefelatomen zu kondensierbaren Stickstoffgruppen wird ein besonders hoher Vernetzungsgrad der gewünschten Phosphor-Stickstoff-Verbindungen und damit eine möglichst geringe Wasserlöslichkeit dieser Verbindungen erreicht. In Abhängigkeit vom Verhältnis des entsprechenden Phosphorsulfids zur eingesetzten Aminokomponente und der Reaktionstemperatur wird der Schwefel bei der Kondensation vollständig oder teilweise in Form gasförmiger Verbindungen, z.B. H₂S, COS und/oder CS₂, oder sublimierbarer Verbindungen abgespalten. In dem erfindungsgemäßen Verfahren, das bei einer Temperatur von ≥ 200°C durchgeführt wird, wird somit ein wasserunlösliches Produkt mit nur noch geringem Schwefelgehalt erhalten.

Die Umsetzung erfolgt gemäß des erfindungsgemäßen Verfahrens im allgemeinen in einer Inertgasatmosphäre. Dabei sind unter Inertgas alle Gase zu verstehen, die mit den Ausgangssubstanzen, Zwischen- und Endprodukten keine chemischen Reaktionen eingehen. Geeignete Inertgase sind Ar, N₂, He und CO₂, besonders bevorzugt ist N₂.

In einer bevorzugten Ausführungsform umfaßt das erfindungsgemäße Verfahren die folgenden Schritte:
a) gemeinsames Erhitzen des Phosphorsulfids und der Aminokomponente auf eine Temperatur T₁ unter Inertgas, und
b) langsames Erhitzen der erhaltenen Reaktionsmischung unter Inertgas auf Tₘₐₓ von ≥ 200°C.

Die Temperatur T₁ in Schritt a) beträgt im allgemeinen 90 bis 300°C, bevorzugt 95 bis 250°C, besonders bevorzugt 180 bis 250 °C. Bei der Umsetzung tritt üblicherweise eine Gasentwicklung von z.B. H₂S, COS und/oder CS₂ auf. Das Ende des Schritts a) ist an der Beendigung dieser Gasentwicklung zu erkennen. die Reaktionszeiten sind dabei unter anderem abhängig von der Dosierrate der Aminokomponente.

Die am Ende des Schritts a) erhaltene Reaktionsmischung liegt üblicherweise in fester Form vor.

In dem anschließenden Schritt b) wird die erhaltene, gegebenenfalls zerkleinerte Reaktionsmischung bei einer Temperatur Tₘₐₓ von ≥ 200°C, bevorzugt von 200 bis 250°C, besonders bevorzugt von 280 bis 350°C getempert.

Schritt b) wird unter einem der bereits genannten Inertgase durchgeführt.

Der den erhaltenen Phosphor-Stickstoff-Verbindungen je nach Schwefelgehalt eventuell anhaftende Geruch von Schwefelwasserstoff kann durch Zugabe von im allgemeinen 2 bis 20 Gew.-%, bevorzugt von 5 bis 15 Gew.-% Zinkoxid in Schritt b) entfernt werden. Durch den Zinkoxid-Zusatz werden die Eigenschaften der Phosphor-Stickstoff-Verbindungen, insbesondere deren Flammschutzwirkung, nicht beeinträchtigt.

Eine weitere Möglichkeit zur Entfernung des den Phosphor-Stickstoff-Verbindungen gegebenenfalls anhaftenden Geruchs ist eine Oxidation der Phosphor-Stickstoff-Verbindungen mit einem oxidierenden Gas wie Luft, Sauerstoff, NO₂, bevorzugt Luft, bei im allgemeinen 50 bis 300°C, bevorzugt bei 100 bis 300°C.

Als Reaktionsgefäße für die Durchführung des erfindungsgemäßen Verfahrens sind im allgemeinen alle gängigen Reaktortypen geeignet. Besonders bevorzugt wird ein Rührkessel mit wandgängigem Rührer oder ein Schaufeltrockner bzw. Diskotherm-Reaktor verwendet, wodurch das sich bildende, gegebenenfalls feste, Produkt noch während der ablaufenden Reaktion in Schritt a) gemahlen und homogenisiert werden kann.

Ein weiterer Gegenstand der vorliegenden Erfindung sind Phosphor-Stickstoff-Verbindungen, herstellbar nach dem erfindungsgemäßen Verfahren. Diese Verbindungen zeichnen sich durch eine hohe thermische Stabilität sowie durch geringe Wasserlöslichkeit aus.

Sie eignen sich hervorragend für den Einsatz als Flammschutzmittel, insbesondere in thermoplastischen Formmassen. Ein weiterer Gegenstand der vorliegenden Erfindung ist somit die Verwendung der erfindungsgemäßen Phosphor-Stickstoff-Verbindungen als Flammschutzmittel in thermoplastischen Formmassen.

Der Bedarf an halogenfreien Flammschutzmitteln, wie den erfindungsgemäßen Phosphor-Stickstoff-Verbindungen, ist groß, da üblicherweise eingesetzte halogenhaltige Flammschutz-Mittel im Brandfall toxische bzw. korrosive Verbindungen wie Dioxine und halogenhaltige Kohlenwasserstoffe freisetzen können. Der üblicherweise eingesetzte rote Phosphor hat den Nachteil der Eigenfarbe.

Aufgrund der großen Thermostabilität der erfindungsgemäßen Phosphor-Stickstoff-Verbindungen, die sich bis im allgemeinen 300 °C über einen Zeitraum von mindestens 15 Minuten nicht zersetzen, ist eine Einarbeitung der Verbindungen in hochschmelzende Formmassen wie Polyamid 66 und Polybutylenterephthalat ohne teilweise Zersetzung der Phosphor-Stickstoff-Verbindungen möglich.

Des weiteren weisen die erfindungsgemäßen Phosphor-Stickstoff-Verbindungen eine helle Eigenfarbe auf, so daß die Färbung der gewünschten Endprodukte durch eine Einarbeitung der erfindungsgemäßen Phosphor-Stickstoff-Verbindungen nicht beeinträchtigt wird. Die Polymerverträglichkeit der erfindungsgemäßen Phosphor-Stickstoff-Verbindungen ist hoch, wodurch eine homogene Verteilung der Verbindungen in den thermoplastischen Formmassen erreicht wird.

Die erfindungsgemäßen Phosphor-Stickstoff-Verbindungen sind sowohl in unverstärkten Polymeren als auch in mit Füllstoffen verstärkten Polymeren wirksam. Die hohe Wirksamkeit der erfindungsgemäßen Phosphor-Stickstoff-Verbindungen ist u.a. auf ihren hohen Phosphor-Stickstoff-Gehalt von im allgemeinen in Summe > 50 %, bevorzugt von > 55 %, besonders bevorzugt von > 60 % zurückzuführen, mindestens jedoch 35 %.

Ein weiterer Vorteil der erfindungsgemäßen Phosphor-Stickstoff-Verbindungen als Flammschutzmittel in thermoplastischen Formmassen ist ihre sehr geringe Wasserlöslichkeit. Dadurch wird ein Auswaschen bzw. Migrieren des Flammschutzmittels, insbesondere bei Einsatz der aus den die Phosphor-Stickstoff-Verbindungen enthaltenden thermoplastischen Formmassen hergestellten Produkte in feuchter Witterung, verhindert. Eine Oxidation und/oder Hydrolyse eines in den thermoplastischen Formmassen eingesetzten Flammschutzmittels könnte zu einer partiellen Zerstörung der thermoplastischen Formmassen führen, die jedoch durch den Einsatz der erfindungsgemäßen Phosphor-Stickstoff-Verbindungen vermieden werden kann.

Die als Flammschutzmittel eingesetzten erfindungsgemäßen Phosphor-Stickstoff-Verbindungen eignen sich zur Einarbeitung in beliebige thermoplastische Polymere.

Ein weiterer Gegenstand der vorliegenden Erfindung sind daher thermoplastische Formmassen, enthaltend:
a) 5 bis 99 Gew.-%, bevorzugt 10 bis 80 Gew.-%, besonders bevorzugt 30 bis 80 Gew.-% eines thermoplastischen Polymers als Komponente A;
b) 1 bis 40 Gew.-%, bevorzugt 5 bis 35 Gew.-%, besonders bevorzugt 10 bis 30 Gew.-% einer erfindungsgemäßen Phosphor-Stickstoff-Verbindung als Komponente B;
c) 0 bis 30 Gew.-%, besonders bevorzugt bis zu 20 Gew.-% einer Stickstoffverbindung als Komponente C;
d) 0 bis 50 Gew.-%, bevorzugt 1 bis 50 Gew.-%, besonders bevorzugt 20 bis 40 Gew.-% Füllstoffe als Komponente D;
e) 0 bis 5 Gew.-%, bevorzugt 0,01 bis 3 Gew.-% Schmiermittel als Komponente E;
f) 0 bis 10 Gew.-%, bevorzugt bis zu 8 Gew.-%, besonders bevorzugt bis zu 3 Gew.-% üblicher Zusatzstoffe;
g) 0 bis 30 Gew.-%, bevorzugt bis zu 25 Gew.-%, besonders bevorzugt bis zu 20 Gew.-% übliche Zähmodifier als Komponente G.

### Komponente A

Geeignete thermoplastische Polymere sind sowohl Polykondensate als auch Polymerisate und Polyaddukte. Geeignete thermoplastische Polykondensate sind Polyamide, besonders bevorzugt Polyamid 66, Polyamid 6, Polyamid 11, Polyamid 12, Polyamid 46 sowie Copolyamide wie Polyamid 6/6T, Polyamid 66/6T oder Polyamide, aufgebaut aus Caprolactam und Hexamethylenadipinsäureamid und gegebenenfalls einem weiteren Comonomeren, Polycarbonate, Polyester, bevorzugt Polyterephthalate wie Polyethylenterephthalat und Polybutylenterephthalat, Polyphenylenoxide, Polysulfone und Polyvinylacetate. Geeignete thermoplastische Polymerisate sind Polyolefine, insbesondere Polyethylen, Polypropylen, Poly-1-buten, Poly-4-methyl-1-penten, des weiteren Polyvinylchlorid, Polyvinylidenchlorid, Polymethylmethacrylat, Polyacrylnitril, Polystyrol, schlagzähes Polystyrol, Polyacetale, Polyvinylalkohole, Polyvinylacetat und Poly-p-xylylen. Geeignete thermoplastische Polyaddukte sind lineare Polyurethane. Besonders bevorzugt ist die Komponente A ein thermoplastisches Polykondensat, insbesondere ein Polyamid oder ein Polyester. Ganz besonders bevorzugt handelt es sich um Polyamid 66, Polyamid 6, Polyamid 6/6T, Polyamid 66/6T, Polyamid 6/66 oder um Polyethylenterephthalat und Polybutylenterephthalat. Sowohl Polyamid 66 sowie Polyamid 6, Polyamid 6/6T, Polyamid 66/6T, Polyamid 6/66 als auch Polyethylenterephthalat und Polybutylentherephthalat sind relativ hochschmelzende Polymere. Eine Verarbeitung zu thermoplastischen

Formmassen erfordert daher den Einsatz von Komponenten, die sich bei dem zur Verarbeitung erforderlichen hohen Temperaturen nicht zersetzen. Daher sind die thermisch sehr stabilen erfindungsgemäßen Phosphor-Stickstoff-Verbindungen zum Einsatz als Flammschutzmittel in solchen thermoplastischen Formmassen hervorragend geeignet.

Weitere geeignete thermoplastische Polymere sind Styrol-Acrylnitril-Copolymerisate (SAN), α-Methylstyrol-Acrylnitril-Copolymerisate, Styrol-Methacrylsäuremethylester-Copolymerisate und Styrol-Maleinsäurenydrid-Copolymerisate sowie Acrylnitril-Butadien-Styrol-Polymerisate (ABS) und Acrylnitril-Styrol-Acrylester-Polymerisate (ASA).

### Komponente B

Bei der Komponente B handelt es sich um die erfindungsgemäßen Phosphor-Stickstoff-Verbindungen, die nach dem erfindungsgemäßen Verfahren herstellbar sind.

### Komponente C

Die Komponente C ist eine Stickstoffverbindung ausgewählt aus Guanidinsalzen, Allantoin-Verbindungen, Ammoniumpolyphosphaten, Melamin und Melaminverbindungen, bevorzugt Melamincyanurat.

### Komponente D

Geeignete Füllstoffe sind Carbonate, insbesondere Kalziumcarbonat, Silicate wie Talk, Ton und Glimmer, Kieselerde, Kalzium- und Bariumsulfat, Aluminiumhydroxid, Glasfasern und -kugeln sowie Holzmehl und Cellulosepulver.

### Komponente E

Geeignete Schmiermittel sind insbesondere Fettsäureamide bzw. -ester, die jeweils ein- oder mehrwertig sein können, Fettsäuresalze, bevorzugt Fettsäuresalze des Zinks und Kalziumstearat, Salze und Ester der Montansäure, wobei die Ester der Montansäure bevorzugt sind, insbesondere solche mit C₁₂- bis C₁₆-Alkylketten, Polyalkylenwachse und modifizierte Alkylenwachse, insbesondere Polyethylenwachse und teiloxidierte Polyethylenwachse.

### Komponente F

Übliche Zusatzstoffe sind Stabilisatoren, Nukleierungsmittel, Pigmente, Farbstoffe, Weichmacher und Antitropfmittel.

### Komponente G

Als übliche Zähmodifier sind insbesondere Ethylen-Propylen-Kautschuk (EPM) und Ethylen-Propylen-Dien-Kautschuke (EPDM), die jeweils bevorzugt mit reaktiven Gruppen (Carbonsäuren, Anhydriden) gepfropft sind, sowie Copolymere des Ethylens mit Acrylsäure und/oder Methacrylsäure und/oder den Estern dieser Säuren, geeignet.

Die thermoplastischen Formmassen können durch Mischen der Komponenten A und B sowie gegebenenfalls C bis G bei erhöhten Temperaturen, so daß die Komponente A aufgeschmolzen wird hergestellt werden.

Diese thermoplastischen Formmassen, enthaltend die erfindungsgemäßen Phosphor-Stickstoff-Verbindungen als Flammschutzmittel, können zur Herstellung von Formkörpern, Folien und Fasern verwendet werden.

Durch die Verwendung der erfindungsgemäßen Phosphor-Stickstoff-Verbindungen als Flammschutzmittel in thermoplastischen Formmassen werden Flammschutzanforderungen von mindestens UL 94 V-2, bevorzugt UL 94 V-0 erfüllt. Dabei bedeutet UL Underwriter Laboratories, V-2 bedeutet eine Nachbrennzeit pro Beflammung von ≤ 30 s und eine Gesamtnachbrennzeit bei 10 Beflammungen von ≤ 250 s. V-O bedeutet eine Nachbrennzeit pro Beflammung von ≤ 10 s und eine Gesamtnachbrennzeit von ≤ 50 s. V-1 (siehe Tabelle 1) bedeutet dieselbe Nachbrennzeit und Gesamtnachbrennzeit wie V-2, jedoch kein brennendes Abtropfen.

Die nachfolgenden Beispiele erläutern die Erfindung zusätzlich.

### Beispiele

### Herstellung der Phosphor-Stickstoff-Verbindungen

### Beispiel 1

Eine Mischung aus 200 g Phosphorpentasulfid und 270 g Harnstoff wurde im Glaskolben unter Stickstoffatmosphäre innerhalb von 5 Stunden auf 235°C erhitzt. Dabei bildete sich zunächst unter Gasentwicklung eine homogene Schmelze, die bei erhöhter Temperatur unter heftiger Gasentwicklung aufschäumte und fest wurde. Nach Abkühlen wurde das Reaktionsprodukt gemahlen und 5 Stunden unter Stickstoffatmosphäre bei 350°C getempert. Es wurden 199 g Produkt erhalten (24,8 Gew.-% Phosphor, 38,7 Gew.-% Stickstoff, 20,8 Gew.-% Sauerstoff, 12,0 Gew.-% Kohlenstoff, 0,3 Gew.-% Schwefel). Die Löslichkeit in Wasser betrug nach 5 Stunden 0,81 g / 1000 g.

### Beispiel 2

Eine Mischung aus 240 g Phosphorpentasulfid und 454,2 g Dicyandiamid wurden im Glaskolben unter Stickstoffatmosphäre innerhalb von 15 Minuten auf 96°C erhitzt. Dabei bildete sich unter heftiger Gasentwicklung eine schaumige Masse, die bald erstarrte. Nach Abkühlen wurde das Produkt gemahlen, unter Stickstoffatmosphäre langsam auf 350°C erhitzt und 8 Stunden bei 350°C getempert. Es wurden 439 g Produkt erhalten (13,8 Gew.-% Phosphor, 55,9 Gew.-% Stickstoff, 21,9 Gew.-% Kohlenstoff, 4,6 Gew.-% Schwefel). Die Löslichkeit in Wasser betrug nach 5 Stunden 0,17 g / 1000 g.

### Beispiel 3

In einem Schaufeltrockner (Volumen 0,77 1) wurden 100 g Phosphorpentasulfid vorgelegt und auf 200°C vorgeheizt. Anschließend wurden über einen Zeitraum von 3,5 Stunden portionsweise insgesamt 188 g Dicyandiamid zugefahren. Die Reaktionstemperatur betrug dabei 250°C. Nach Beendigung der Reaktion wurden 10 g Zinkoxid zugegeben und das Produkt 2 Stunden bei 300°C getempert. Es wurden 143 g Produkt erhalten.

### Einsatz der hergestellten Phosphor-Stickstoff-Verbindungen als Flammschutzmittel

Die Komponenten wurden auf einem Zweiwellenextruder bei 280°C (Polyamid 66) bzw. 260°C (Polybutylenterephthalat) gemischt. Für die Brandtests nach UL 94 wurden Brandstäbe in der Dicke 1,6 mm auf einer Spritzgußmaschine hergestellt. Die Brandtests wurden nach der üblichen Konditionierung (2 Tage bei 23 ± 2°C und einer Luftfeuchtigkeit von 50 ± 5 % und 7 Tage bei 70 ± 1°C und nachfolgendes Abkühlen im Exsikkator) gemäß UL-Vorschrift durchgeführt. Dazu wurden 5 Brandstäbe je 2 mal für 10 s mit einem Gasbrenner (Flammhöhe 20 ± 1 mm) beflammt und die Nachbrennzeit gemessen.

### Komponenten:

### Komponente A1:

Polyamid 66 mit einer Viskositätszahl von 147 ml/g (gemessen mit einem Ubbelohde-Kapillar-Viskosimeter in 0,5 % Lösung in 96 %-iger H₂SO₄).

### Komponente A2:

Polybutylenterephthalat mit einer Viskositätszahl von 130 ml/g (gemessen mit einem Ubbelohde-Kapillar-Viskosimeter in 0,5 % Lösung in Dichlorbenzol/Phenol 1/1).

### Komponente B1:

Phosphor-Stickstoff-Verbindung analog zu Synthese-Beispiel 1.

### Komponente B2:

Phosphor-Stickstoff-Verbindung analog zu Synthese-Beispiel 2.

### Komponente B3:

Phosphor-Stickstoff-Verbindung analog zu Synthese-Beispiel 3.

### Komponente B4 (Vergleichsversuch):

Melaminpolyphosphat (Melapur P200, von DSM Melapur).

### Komponente C:

Melamincyanurat.

### Komponente D:

Schnittglasfaser mit einer Dicke von 10 µm.

In der folgenden Tabelle 1 sind verschiedene thermoplastische Formmassen sowie deren Einstufung nach UL 94 dargestellt.

| | 1 | 2 | 3 | 4 (V)¹⁾ | 5 | 6 | 7 |
|---|---|---|---|---|---|---|---|
| **A1** **[Gew.-%]** | 55 | 55 | 55 | 55 | | | |
| **A2** **[Gew.-%]** | | | | | 50 | 50 | 50 |
| **B1** **[Gew.-%]** | 20 | | | | 25 | | |
| **B2** **[Gew.-%]** | | 20 | | | | 20 | 10 |
| **B3** **[Gew.-%]** | | | 20 | | | | |
| **B4** **[Gew.-%]** | | | | 20 | | | |
| **C** **[Gew.-%]** | | | | | | | 10 |
| **D** **[Gew.-%]** | 25 | 25 | 25 | 25 | 25 | 30 | 30 |
| **UL 94** **1,6 mm** | V-O | V-O | V-O | V-1 | V-2 | V-2 | V-2 |

| | | | | | | | |
|---|---|---|---|---|---|---|---|
| ¹⁾ Vergleichsversuch | | | | | | | |

## Patentansprüche

1. Verfahren zur Herstellung von Phosphor-Stickstoff-Verbindungen durch Umsetzung von Phosphorsulfiden mit einer Aminokomponente, die
• mindestens ein Stickstoffatom mit mindestens zwei Wasserstoffatomen, oder
• mindestens zwei Stickstoffatome mit mindestens einem Wasserstoffatom aufweist,
**dadurch gekennzeichnet, daß** die Bildung der gewünschten Phosphor-Stickstoff-Verbindungen bei einer Temperatur Tₘₐₓ von ≥ 200°C erfolgt.

2. Verfahren nach Anspruch 1, **dadurch gekennzeichnet, daß** die Aminokomponente ausgewählt ist aus primären aliphatischen oder aromatischen Aminen, primären oder sekundären Diaminen, Diiminen, primären oder sekundären Ammoniumsalzen, Amiden organischer oder anorganischer Säuren, Hydrazinen, Hydraziden, Semicarbaziden, Semicarbazonen, Harnstoff, Dicyandiamid, Melamin, Guanidin oder dessen Salz oder Mischungen davon.

3. Verfahren nach Anspruch 2, **dadurch gekennzeichnet, daß** die Aminokomponente ausgewählt ist aus Harnstoff, Dicyandiamid, Melamin, Guanidin oder Mischungen davon.

4. Verfahren nach einem der Ansprüche 1 bis 3, **dadurch gekennzeichnet, daß** monomolekulare Phosphorsulfide der Zusammensetzung P₄Sₙ, wobei n = 3 bis 10 ist, oder Gemische davon, eingesetzt werden.

5. Verfahren nach Anspruch 4, **dadurch gekennzeichnet, daß** das Phorphorsulfid P₄S₁₀ ist.

6. Verfahren nach einem der Ansprüche 1 bis 5, **dadurch gekennzeichnet, daß** das Verhältnis von in den Phosphorsulfiden enthaltenen Schwefelatome zu in der Aminokomponente enthaltenden kondensierbaren Stickstoffgruppen 1 : 0,5 bis 1 : 10 beträgt.

7. Verfahren nach einem der Ansprüche 1 bis 6, umfassend die folgenden Schritte:
a) gemeinsames Erhitzen des Phosphorsulfids und der Aminokomponente auf eine Temperatur T₁ unter Inertgas, und
b) langsames Erhitzen der erhaltenen Reaktionsmischung unter Inertgas auf Tₘₐₓ von ≥ 200°C.

8. Verfahren nach Anspruch 7, **dadurch gekennzeichnet, daß** Schritt b) unter Zugabe von 2 bis 20 Gew.-% Zinkoxid durchgeführt wird.

9. Phosphor-Stickstoff-Verbindungen, herstellbar nach einem Verfahren der Ansprüche 1 bis 8.

10. Verwendung von Phosphor-Stickstoff-Verbindungen gemäß Anspruch 9 als Flammschutzmittel in thermoplastischen Formmassen.

11. Thermoplastische Formmassen, enthaltend:
a) 5 bis 99 Gew.-% eines thermoplastischen Polymers als Komponente A;
b) 1 bis 40 Gew.-% einer Verbindung gemäß Anspruch 9 als Komponente B;
c) 0 bis 30 Gew.-% einer Stickstoffverbindung als Komponente C;
d) 0 bis 50 Gew.-% Füllstoffe als Komponente D;
e) 0 bis 5 Gew.-% Schmiermittel als Komponente E;
f) 0 bis 10 Gew.-% üblicher Zusatzstoffe als Komponente F;
g) 0 bis 30 Gew.-% üblicher Zähmodifier als Komponente G.

12. Verfahren zur Herstellung von thermoplastischen Formmassen gemäß Anspruch 11, **dadurch gekennzeichnet, daß** die Komponenten A und B sowie gegebenenfalls C bis G bei erhöhter Temperatur, wobei die Komponente A aufgeschmolzen wird, gemischt werden.

13. Verwendung von thermoplastischen Formmassen gemäß Anspruch 11 zur Herstellung von Formkörpern, Folien und Fasern.

## Claims

1. A process for preparing phosphorus-nitrogen compounds by reacting phosphorus sulfides with an amino component which
• has at least one nitrogen atom having at least two hydrogen atoms,
or
• has at least two nitrogen atoms having at least one hydrogen atom,
which comprises forming the desired phosphorus-nitrogen compounds at a temperature Tₘₐₓ ≥ 200°C.

2. A process as claimed in claim 1, wherein the amino component has been selected from primary aliphatic or aromatic amines, primary or secondary diamines, diimines, primary or secondary ammonium salts, amides of organic or inorganic acids, hydrazines, hydrazides, semicarbazides, semicarbazones, urea, dicyandiamide, melamine, guanidine or its salt, or mixtures of these.

3. A process as claimed in claim 2, wherein the amino component has been selected from urea, dicyandiamide, melamine, guanidine or mixtures of these.

4. A process as claimed in any one of claims 1 to 3, wherein use is made of monomeric phosphorus sulfides of composition P₄Sₙ, where n is from 3 to 10, or mixtures of these.

5. A process as claimed in claim 4, wherein the phosphorus sulfide is P₄S₁₀.

6. A process as claimed in any one of claims 1 to 5, wherein the ratio of sulfur atoms present in the phosphorus sulfides to condensable nitrogen groups present in the amino component is from 1:0.5 to 1:10.

7. A process as claimed in any one of claims 1 to 6, embracing the following steps:
a) heating the phosphorus sulfide and the amino component together to the temperature T₁ under an inert gas, and
b) slowly heating the resultant reaction mixture to Tₘₐₓ ≥ 200°C under an inert gas.

8. A process as claimed in claim 7, wherein step b) is carried out with addition of from 2 to 20% by weight of zinc oxide.

9. A phosphorus-nitrogen compound which can be prepared by a process of claims 1 to 8.

10. The use of a phosphorus-nitrogen compound as claimed in claim 9 as flame retardant in thermoplastic molding compositions.

11. A thermoplastic molding composition comprising:
a) from 5 to 99% by weight of a thermoplastic polymer, as component A,
b) from 1 to 40% by weight of a compound as claimed in claim 9, as component B,
c) from 0 to 30% by weight of a nitrogen compound, as component C,
d) from 0 to 50% by weight of fillers, as component D,
e) from 0 to 5% by weight of lubricants, as component E,
f) from 0 to 10% by weight of conventional additives, as component F, and
g) from 0 to 30% by weight of conventional impact modifiers, as component G.

12. A process for preparing a thermoplastic molding composition as claimed in claim 11, which comprises mixing components A and B and also, if desired, C to G at an elevated temperature, with melting of component A.

13. The use of a thermoplastic molding composition as claimed in claim 11 for producing moldings, films or fibers.

## Revendications

1. Procédé de préparation de composés de phosphore-azote par réaction de sulfures de phosphore avec un composant aminé, présentant
• au moins un atome d'azote avec au moins deux atomes d'hydrogène, ou
• au moins deux atomes d'azote avec au moins un atome d'hydrogène,
**caractérisé en ce que** la formation des composés de phosphore-azote souhaités se fait à une température Tₘₐₓ ≥ 200°C.

2. Procédé selon la revendication 1, **caractérisé en ce que** le composé aminé est choisi parmi des amines primaires aliphatiques ou aromatiques, des diamines, diimines primaires ou secondaires, des sels d'ammonium primaire ou secondaire, des amides d'acides organiques ou inorganiques, des hydrazines, des hydrazides, des semicarbazides, des semicarbazones, de l'urée, du dicyanamide, de la mélamine, de la guanidine ou ses sels ou leurs mélanges.

3. Procédé selon la revendication 2, **caractérisé en ce que** le composé aminé est choisi parmi l'urée, le dicyanamide, la mélamine, la guanidine, ou leurs mélanges.

4. Procédé selon l'une quelconque des revendications 1 à 3, **caractérisé en ce que** l'on met en oeuvre des sulfures de phosphore de la composition P₄Sₙ, où n = 3 à 10, ou leurs mélanges.

5. Procédé selon la revendication 4, **caractérisé en ce que** le sulfure de phosphore est du P₄S₁₀.

6. Procédé selon l'une quelconque des revendications 1 à 5, **caractérisé en ce que** la proportion des atomes de soufre contenus dans le sulfure de phosphore aux groupes azotés condensables contenus dans les composants aminés est de 1 : 0,5 à 1 : 10.

7. Procédé selon l'une des revendications 1 à 6, comprenant les étapes suivantes:
a) chauffage conjoint du sulfure de phosphore et du composant aminé à une température T₁ sous atmosphère de gaz inerte, et
b) chauffage lent du mélange réactionnel obtenu, sous atmosphère de gaz inerte, à une Tₘₐₓ ≥ 200°C.

8. Procédé selon la revendication 7, **caractérisé en ce que** l'étape b) est entreprise avec addition de 2 à 20% en poids d'oxyde de zinc.

9. Composés de phosphore-azote, que l'on peut préparer par un procédé selon l'une quelconque des revendications 1 à 8.

10. Utilisation de composés de phosphore-azote selon la revendication 9 comme agents ignifugeants dans des masses de moulage thermoplastiques.

11. Masses de moulage thermoplastique, contenant:
a) de 5 à 99% en poids d'un polymère thermoplastique en tant que composant A,
b) de 1 à 40% en poids d'un composé selon la revendication 9 en tant que composant B,
c) de 0 à 30% en poids d'un composé azoté en tant que composant C,
d) de 0 à 50% en poids de matières de remplissage en tant que composant D,
e) de 0 à 5% en poids de lubrifiant en tant que composant E,
f) de 0 à 10% en poids d'additifs usuels en tant que composant F,
g) de 0 à 30% en poids de modificateurs de ténacité usuels en tant que composant G.

12. Procédé de préparation de masses de moulage thermoplastiques selon la revendication 11, **caractérisé en ce que** les composants A et B ainsi qu'éventuellement C à G sont mélangés à une température élevée, à laquelle le composant A est fondu.

13. Utilisation de masses de moulage thermoplastiques selon la revendication 11 pour la préparation de corps façonnés, de feuilles et de fibres.
